# EUROPEAN PATENT APPLICATION

(11) **EP 4 510 216 A1**
(43) Date of publication of application: **19.02.2025**
(21) Application number: 22965403.3
(22) Date of filing: 14.11.2022
(51) Int. Cl.: H01M 4/133, H01M 10/0525

(54) **SECONDARY BATTERY AND ELECTRIC DEVICE COMPRISING SAME**

(71) Applicant: Contemporary Amperex Technology Co., Limited, Ningde, Fujian 352100 (CN)
(72) Inventor: MA, Yu, Ningde, Fujian 352100 (CN); ZHANG, Xinxin, Ningde, Fujian 352100 (CN); CHEN, Xiaoxia, Ningde, Fujian 352100 (CN); OUYANG, Chuying, Ningde, Fujian 352100 (CN); CHENG, Weiming, Ningde, Fujian 352100 (CN); LIU, Shikun, Ningde, Fujian 352100 (CN)
(74) Representative: Ran, Handong
(86) International application number: PCT/CN2022/131678
(87) International publication number: WO 2024/103210

(57) **Abstract**

Provided in the present application are a secondary battery and an electric device comprising same. The secondary battery comprises a negative electrode plate. The negative electrode plate comprises a negative electrode current collector and a negative electrode film layer arranged on at least one surface of the negative electrode current collector, wherein the negative electrode film layer comprises a negative electrode active material, the negative electrode active material comprising a carbon-based material. In the negative electrode active material, the volume ratio of a first carbon-based material having a particle size of less than or equal to 2 µm is greater than or equal to 15%. The first effect and cycling performance of the secondary battery are good.

## Description

### TECHNICAL FIELD

This application relates to the field of batteries, and specifically to a secondary battery and an electric apparatus containing the same.

### BACKGROUND

Secondary batteries are increasingly widely used due to their clean and renewable characteristics, and have advantages such as high energy density, low self-discharge, and excellent cycling performance.

With the rising of demands, people have increasingly high requirements for electrochemical performance of secondary batteries. In particular, with the increasingly tight supply of lithium resources, sodium-ion secondary batteries with richer sodium resource reserves and lower costs have drawn more attention. However, electrochemical performance of conventional sodium-ion batteries fails to meet people's needs and is still in need of improvements.

### SUMMARY

In view of the preceding problems, this application provides a secondary battery and an electric apparatus containing the same, so as to improve cycling performance of the secondary battery.

To achieve the above purpose, according to a first aspect of this application, a secondary battery is provided, including a negative electrode plate, where the negative electrode plate includes a negative electrode current collector and a negative electrode film layer provided on at least one surface of the negative electrode current collector, the negative electrode film layer includes a negative electrode active material, and the negative electrode active material includes a carbon-based material; where in the negative electrode active material, a volume percentage of a first carbon-based material with a particle size less than or equal to 2 µm is greater than or equal to 15%.

In the secondary battery, the negative electrode active material in the negative electrode film layer of the negative electrode plate is controlled to contain the first carbon-based material with the particle size in a specified range, and the volume percentage of the first carbon-based material in the negative electrode active material is regulated, so that contact areas between the negative electrode active particles are increased and the negative electrode active particles are closely accumulated, thereby enhancing adhesion of the negative electrode plate, which in turn can improve cycling performance of the secondary battery.

In any embodiment of this application, in the negative electrode active material, the volume percentage of the first carbon-based material is 20%-70%, optionally 30%-60%. The volume percentage of the first carbon-based material with a particle size less than or equal to 2 µm is further regulated for its better compounding with another negative electrode active material, thus further improving the cycling performance of the secondary battery.

In any embodiment of this application, the first carbon-based material satisfies at least one of the following conditions (1) to (7):
(1) a volume-based particle size Dᵥ10 of the first carbon-based material is 0.2-0.5 µm;
(2) a volume-based particle size Dᵥ50 of the first carbon-based material is 0.5-2 µm;
(3) a volume-based particle size Dᵥ90 of the first carbon-based material is less than or equal to 2 µm;
(4) a specific surface area SSA of the first carbon-based material is 5-20 m²/g;
(5) in Raman spectroscopy test of the first carbon-based material, I_{D}/I_{G} is 0.95-1.35;
(6) a powder compacted density of the first carbon-based material under a force of 50,000 N is 0.8-1.1 g/cm³; and
(7) a tap density of the first carbon-based material is 0.3-0.8 g/cm³.

In any embodiment of this application, in the negative electrode active material, a volume percentage of a second carbon-based material with a particle size greater than 2 µm and less than or equal to 25 µm is 20%-80%, optionally 50%-60%.

In any embodiment of this application, the second carbon-based material satisfies at least one of the following conditions (I) to (VIII):
(I) a volume-based particle size of the second carbon-based material exhibits unimodal distribution;
(II) a volume-based particle size Dᵥ10 of the second carbon-based material is 2-4 µm;
(III) a volume-based particle size Dᵥ50 of the second carbon-based material is 4-8 µm;
(IV) a volume-based particle size Dᵥ90 of the second carbon-based material is 8-20 µm;
(V) a volume-based particle size Dᵥ99 of the second carbon-based material is 20-25 µm;
(VI) a specific surface area SSA of the second carbon-based material is 1-10 m²/g;
(VII) a powder compacted density of the second carbon-based material under a force of 50,000 N is 0.92-1.2 g/cm³; and
(VIII) a tap density of the second carbon-based material is 0.6-0.94 g/cm³.

In any embodiment of this application, in the negative electrode active material, a volume percentage of a third carbon-based material with a particle size greater than 40 µm and less than or equal to 100 µm is less than or equal to 10%, optionally less than or equal to 5%.

In any embodiment of this application, the third carbon-based material satisfies at least one of the following conditions (1) to (4):
(1) a specific surface area SSA of the third carbon-based material is 1-10 m²/g;
(2) in Raman spectroscopy test of the third carbon-based material, I_{D}/I_{G} is 0.95-1.35;
(3) a powder compacted density of the third carbon-based material under a force of 50,000 N is 0.7-1 g/cm³; and
(4) a tap density of the third carbon-based material is 0.5-0.8 g/cm³.

In any embodiment of this application, a volume-based particle size Dᵥ50 of the negative electrode active material is less than or equal to 8 µm, and optionally, the volume-based particle size Dᵥ50 of the negative electrode active material is 2-6 µm.

The volume-based particle size Dᵥ50 of the negative electrode active material is further regulated to be within a specified range, so as to further improve initial coulombic efficiency of the secondary battery.

In any embodiment of this application, a volume-based particle size of the negative electrode active material satisfies 4 µm ≤ Dᵥ90 ≤ 20 µm, optionally 5 µm ≤ Dᵥ90 ≤ 16 µm.

In any embodiment of this application, a volume-based particle size Dᵥ10 of the negative electrode active material satisfies 0.2 µm ≤ Dᵥ10 ≤ 2 µm, optionally 0.5 µm ≤ Dᵥ10 ≤ 1.8 µm.

In any embodiment of this application, a specific surface area SSA of the negative electrode active material is less than or equal to 20 m²/g, optionally SSA ≤ 10 m²/g.

In any embodiment of this application, in Raman spectroscopy test of the negative electrode active material, I_{D}/I_{G} is 0.87-1.35, optionally 0.91-1.25.

In any embodiment of this application, in X-ray diffraction test of the negative electrode active material, a (002) crystal plane peak is present within a range of 22°-24°, and an interlayer spacing of the (002) crystal plane of the negative electrode active material is greater than or equal to 0.37 nm, optionally 0.37-0.42 nm.

In any embodiment of this application, a powder compacted density of the negative electrode active material under a force of 50,000 N is 0.90-1.5 g/cm³, optionally 0.95-1.3 g/cm³.

In any embodiment of this application, a tap density of the negative electrode active material is 0.50-0.97 g/cm³, optionally 0.6-0.94 g/cm³.

In any embodiment of this application, the carbon-based material includes a plurality of nanopore structures, and optionally the carbon-based material includes a plurality of pore structures with a pore diameter of 10 nm or below.

In any embodiment of this application, the carbon-based material includes a hard carbon material.

In any embodiment of this application, the secondary battery is a sodium-ion secondary battery.

According to a second aspect of this application, an electric apparatus is provided, including the secondary battery according to the first aspect of this application.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. Moreover, throughout the accompanying drawings, like reference signs denote like components. In the accompanying drawings:
FIG. 1 is a schematic diagram of an embodiment of a secondary battery.
FIG. 2 is an exploded view of FIG. 1.
FIG. 3 is a schematic diagram of an embodiment of a battery pack.
FIG. 4 is an exploded view of FIG. 3.
FIG. 5 is a schematic diagram of an embodiment of an electric apparatus using a secondary battery as a power source.
FIG. 6 shows electron microscope images of hard carbon particles before mixing in example 1.
FIG. 7 is an electron microscope image of hard carbon particles after mixing in example 1.

Description of reference signs:
1. battery pack; 2. upper box body; 3. lower box body; 4. secondary battery; 41. housing body; 42. electrode assembly; 43. cover plate; and 5. electric apparatus.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the technical terms "first", "second", and the like are merely intended to distinguish between different objects, and shall not be understood as any indication or implication of relative importance or any implicit indication of the number, sequence or primary-secondary relationship of the technical features indicated. In the descriptions of the embodiments of this application, "a plurality of" means at least two unless otherwise specifically defined.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skills in the art can understand specific meanings of these terms in the embodiments of this application as appropriate to specific situations.

A secondary battery generates electrical energy mainly through migration of active ions between a positive electrode and a negative electrode. During charge, active ions deintercalate from the positive electrode and intercalate into the negative electrode through an electrolyte; and during discharge, the process is reversed. However, during charge and discharge of the secondary battery, intercalation and deintercalation of active ions (for example, sodium ions) lead to swelling and shrinkage of a negative electrode plate, which damages a structure of a negative electrode material. In addition, during cyclic charge and discharge, co-intercalation of a solvent in the electrolyte, reduction of an organic solvent, and gas production under high current all cause the negative electrode active material to peel off, leading to increased interface instability of the negative electrode plate, and resulting in loss of a negative electrode active substance and damage to a solid electrolyte interface (SEI) film, which in turn shortens cycle life of the battery.

To sum up, the interface instability of the negative electrode plate limits the improvement of the cycling performance of the secondary battery. In conventional technologies, increased interface stability of the negative electrode plate is generally achieved by improving a binder. However, the binder generally requires the use of macromolecular resin, which swells after long-term contact with electrolyte, thus deteriorating cycling performance of the secondary battery instead.

In view of this, persons skilled in the art of this application take a different approach and creatively propose to regulate the particle size of the negative electrode active material to strengthen collaboration between the negative electrode active material particles, so as to enhance adhesion of the negative electrode plate, thus improving cycling performance of the secondary battery. Persons skilled in the art of this application obtain the technical solutions of this application through massive experiments and researches.

An embodiment of this application provides a secondary battery including a negative electrode plate, where the negative electrode plate includes a negative electrode current collector and a negative electrode film layer provided on at least one surface of the negative electrode current collector, the negative electrode film layer includes a negative electrode active material, and the negative electrode active material includes a carbon-based material; where in the negative electrode active material, a volume percentage of a first carbon-based material with a particle size less than or equal to 2 µm is greater than or equal to 15%.

In the secondary battery, the negative electrode active material in the negative electrode film layer of the negative electrode plate is controlled to contain the first carbon-based material with the particle size in a specified range, and the volume percentage of the first carbon-based material in the negative electrode active material is regulated, so that contact areas between the negative electrode active particles are increased and the negative electrode active particles are closely accumulated, thereby enhancing adhesion of the negative electrode plate, which in turn effectively improves cycling performance of the secondary battery.

In any embodiment of this application, in the negative electrode active material, the volume percentage of the first carbon-based material is 20%-70%, optionally 30%-60%.

The volume percentage of the first carbon-based material with a particle size less than or equal to 2 µm is further regulated for its better compounding with another negative electrode active material, thus further improving the cycling performance of the secondary battery.

For the above "20%-70%", the values taken include a minimum value and a maximum value within this range, and each value between the minimum value and the maximum value. Specific examples include but are not limited to the point values in this embodiment and the following point values: 20%, 21%, 22%, 23%, 24%, 25%, 26%, 27%, 28%, 29%, 30%, 31%, 32%, 33%, 34%, 36%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, and 70%; or in a range defined by any two of these values, which may be, for example, 20%-50%, 20%-60%, 20%-65%, 20%-70%, 25%-50%, 25%-60%, 25%-65%, 25%-70%, 30%-40%, 30%-50%, 30%-60%, 30%-65%, 35%-55%, 35%-60%, 35%-65%, 35%-70%, 40%-60%, 40%-65%, 40%-70%, 45%-60%, 45%-65%, 45%-70%, 50%-60%, 50%-65%, 50%-70%, 60%-70%, or 65%-70%.

In any embodiment of this application, a volume-based particle size Dᵥ10 of the first carbon-based material is 0.2-0.5 µm.

In any embodiment of this application, a volume-based particle size Dᵥ50 of the first carbon-based material is 0.5-2 µm.

In any embodiment of this application, a volume-based particle size Dᵥ90 of the first carbon-based material is less than or equal to 2 µm.

In any embodiment of this application, a specific surface area SSA of the first carbon-based material is 5-20 m²/g.

In any embodiment of this application, in Raman spectroscopy test of the first carbon-based material, I_{D}/I_{G} is 0.95-1.35.

In any embodiment of this application, a powder compacted density of the first carbon-based material under a force of 50,000 N is 0.8-1.1 g/cm³.

In any embodiment of this application, a tap density of the first carbon-based material is 0.3-0.8 g/cm³.

In any embodiment of this application, in X-ray diffraction test of the first carbon-based material, a (002) crystal plane peak is present within a range of 22°-24°, and an interlayer spacing of the (002) crystal plane of the negative electrode active material is 0.37-0.42 nm.

In any embodiment of this application, in the negative electrode active material, a volume percentage of a second carbon-based material with a particle size greater than 2 µm and less than or equal to 25 µm is 20%-80%, optionally 50%-60%.

For the above "20%-80%", the values taken include a minimum value and a maximum value within this range, and each value between the minimum value and the maximum value. Specific examples include but are not limited to the point values in this embodiment and the following point values: 20%, 21%, 22%, 23%, 24%, 25%, 26%, 27%, 28%, 29%, 30%, 31%, 32%, 33%, 34%, 36%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, and 80%; or in a range defined by any two of these values, which may be, for example, 20%-60%, 20%-65%, 20%-70%, 20%-75%, 20%-80%, 25%-60%, 25%-65%, 25%-70%, 25%-75%, 25%-80%, 30%-60%, 30%-65%, 35%-70%, 35%-75%, 35%-80%, 35%-60%, 35%-65%, 35%-70%, 35%-75%, 35%-80%, 40%-60%, 40%-65%, 40%-70%, 40%-75%, 40%-80%, 45%-60%, 45%-65%, 45%-70%, 45%-75%, 45%-80%, 50%-60%, 50%-65%, 50%-70%, 50%-75%, 50%-80%, 55%-65%, 55%-75%, 55%-80%, 60%-70%, 60%-75%, 60%-80%, 65%-70%, 65%-75%, 65%-80%, or 70%-80%.

In any embodiment of this application, a volume-based particle size of the second carbon-based material exhibits unimodal distribution.

In any embodiment of this application, a volume-based particle size Dᵥ10 of the second carbon-based material is 2-4 µm.

In any embodiment of this application, a volume-based particle size Dᵥ50 of the second carbon-based material is 4-8 µm.

In any embodiment of this application, a volume-based particle size Dᵥ90 of the second carbon-based material is 8-20 µm.

In any embodiment of this application, a volume-based particle size Dᵥ99 of the second carbon-based material is 20-25 µm.

In any embodiment of this application, a specific surface area SSA of the second carbon-based material is 1-10 m²/g.

In any embodiment of this application, a powder compacted density of the second carbon-based material under a force of 50,000 N is 0.92-1.2 g/cm³.

In any embodiment of this application, a tap density of the second carbon-based material is 0.6-0.94 g/cm³.

In any embodiment of this application, in X-ray diffraction test of the second carbon-based material, a (002) crystal plane peak is present within a range of 22°-24°, and an interlayer spacing of the (002) crystal plane of the negative electrode active material is 0.37-0.42 nm.

In any embodiment of this application, in the negative electrode active material, a volume percentage of a third carbon-based material with a particle size greater than 40 µm is 0.

The particle composition in the negative electrode active material is regulated so that the volume percentage of the carbon-based material with a particle size greater than 40 µm is 0, to be specific, no carbon-based material with a particle size greater than 40 µm is present, so as to avoid negative impact of the particles with a larger particle size on the compounding effect.

Further, when the third carbon-based material with a particle size greater than 40 µm is present in the negative electrode active material, the volume percentage of the third carbon-based material with a larger particle size can be further regulated to allow for its better compounding with the carbon-based material with a smaller particle size, so as to reduce the influence on the cycling performance of the battery.

In some embodiments, in the negative electrode active material, the volume percentage of the third carbon-based material with a particle size greater than 40 µm is less than or equal to 10%, optionally less than or equal to 5%.

In the negative electrode active material, the volume percentage of the third carbon-based material with a particle size greater than 40 µm is optionally any one of 0.1%, 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, and 10%; or in a range defined by any two of these values, which may be, for example, 0.1%-5%, 0.1%-4.5%, 0.1%-4%, 0.1%-3.5%, 0.1%-3%, 0.1%-2.5%, 0.1%-2%, 0.1%-1.5%, 0.1%-1%, 0.1%-0.5%, 1%-5%, 1%-4.5%, 1%-4%, 1%-3.5%, 2%-4%, or 3%-5%.

Optionally, the particle size of the third carbon-based material with a particle size greater than 40 µm is greater than 40 µm and less than or equal to 100 µm.

In any embodiment of this application, a specific surface area SSA of the third carbon-based material is 1-10 m²/g.

In any embodiment of this application, in Raman spectroscopy test of the third carbon-based material, I_{D}/I_{G} is 0.95-1.35.

In any embodiment of this application, a powder compacted density of the third carbon-based material under a force of 50,000 N is 0.7-1 g/cm³.

In any embodiment of this application, a tap density of the third carbon-based material is 0.5-0.8 g/cm³.

In any embodiment of this application, in X-ray diffraction test of the third carbon-based material, a (002) crystal plane peak is present within a range of 22°-24°, and an interlayer spacing of the (002) crystal plane of the negative electrode active material is 0.37-0.42 nm.

In any embodiment of this application, a volume-based particle size Dᵥ50 of the negative electrode active material is less than or equal to 8 µm.

Optionally, the volume-based particle size Dᵥ50 of the negative electrode active material is 1-8 µm.

Optionally, the volume-based particle size Dᵥ50 of the negative electrode active material is 1-6 µm.

Optionally, the volume-based particle size Dᵥ50 of the negative electrode active material is 2-6 µm.

The volume-based particle size Dᵥ50 of the negative electrode active material is further regulated to be within a specified range, so as to further improve initial coulombic efficiency of the secondary battery.

In any embodiment of this application, a volume-based particle size of the negative electrode active material satisfies 4 µm ≤ Dᵥ90 ≤ 20 µm, optionally 5 µm ≤ Dᵥ90 ≤ 16 µm.

In any embodiment of this application, a volume-based particle size Dᵥ10 of the negative electrode active material satisfies 0.2 µm ≤ Dᵥ10 ≤ 2 µm, optionally 0.5 µm ≤ Dᵥ10 ≤ 1.8 µM.

In this application, Dᵥ10, Dᵥ50, or Dᵥ90 indicates a particle size of the material corresponding to the cumulative volume distribution percentage reaching 10%, 50%, or 90% respectively, and can be determined using an instrument and a method known in the art. For example, they can be easily measured in accordance with GB/T 19077-2016 particle size distribution laser diffraction method by using a laser particle size analyzer. The test instrument may be a laser particle size analyzer of Mastersizer 2000E model from Malvern Instruments Limited in the United Kingdom.

In any embodiment of this application, a specific surface area SSA of the negative electrode active material is less than or equal to 20 m²/g, optionally SSA ≤ 10 m²/g.

The specific surface area of the negative electrode active material is determined in accordance with GB/T 19587-2004 "Determination of the specific surface area of solids by gas adsorption using the BET method".

In any embodiment of this application, in Raman spectroscopy test of the negative electrode active material, I_{D}/I_{G} is 0.87-1.35, optionally 0.91-1.25.

I_{D}/I_{G} refers to the ratio of peak intensities of peak D and peak G in the Raman spectrogram of the material; where I_{D} represents the intensity of peak D at 1350±50 cm⁻¹ in the Raman spectrogram of the carbon material, I_{G} represents the intensity of peak G at 1580±50 cm⁻¹ in the Raman spectrogram of the carbon material.

In any embodiment of this application, the carbon-based material includes a hard carbon material.

In terms of graphitization difficulty, carbon materials are divided into graphite, soft carbon, and hard carbon, where hard carbon refers to carbon which is difficult to completely graphitize at 2800°C or above and whose disordered structure is difficult to eliminate at high temperatures. Further, precursors for preparing hard carbon materials are not limited to mineral raw materials but may include all compounds containing elements C, H, and O except for mineral raw materials that are particularly prone to graphitization.

In any embodiment of this application, a (002) crystal plane peak is present within a range of 22°-24°, and an interlayer spacing of the (002) crystal plane of the negative electrode active material is greater than or equal to 0.37 nm, optionally 0.37-0.42 nm.

Specifically, in X-ray diffraction test of the negative electrode active material, the interlayer spacing of the (002) crystal plane is calculated using the Bragg equation.

In any embodiment of this application, a powder compacted density of the negative electrode active material under a force of 50,000 N is 0.90-1.5 g/cm³, optionally 0.95-1.3 g/cm³.

The powder compacted density of the negative electrode active material is further regulated to improve the adhesion force of the negative electrode plate, thereby maintaining excellent initial coulombic efficiency while improving the cycling performance of the secondary battery.

In any embodiment of this application, a tap density of the negative electrode active material is 0.50-0.97 g/cm³, optionally 0.6-0.94 g/cm³.

In any embodiment of this application, the carbon-based material includes a plurality of nanopore structures, and optionally the carbon-based material includes a plurality of pore structures with a pore diameter of 10 nm or below.

In any embodiment of this application, based on a total weight of the negative electrode film layer, a mass percentage of the negative electrode active material is 85 wt%-95 wt%.

In any embodiment of this application, the negative electrode film layer further includes a negative electrode conductive agent and a negative electrode binder.

In any embodiment of this application, the negative electrode conductive agent may be a conductive material commonly used in the art, including but not limited to at least one of graphite, carbon nanotubes, nanofiber, carbon black, and graphene. Specifically, the negative electrode conductive agent may be at least one selected from SP, KS-6, acetylene black, Ketjen black ECP with a branched-chain structure, SFG-6, vapor grown carbon fiber VGCF, carbon nanotubes CNTs, graphene, and composite conductive agents thereof.

Based on the total weight of the negative electrode film layer, a weight percentage of the negative electrode conductive agent in the negative electrode film layer is 0 wt%-20 wt%.

The negative electrode binder may be a binder commonly used in the art and may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

Based on the total weight of the negative electrode film layer, a weight percentage of the negative electrode binder in the negative electrode active layer is 0 wt%-30 wt%.

In any embodiment of this application, the negative electrode film layer further optionally includes another additive such as a thickener, for example, sodium carboxymethyl cellulose (CMC-Na). Based on the total weight of the negative electrode active layer, a weight percentage of the another additive in the negative electrode active layer is 0 wt%-15 wt%.

In any embodiment of this application, the current collector of the negative electrode plate may be a metal foil current collector or a composite current collector. For example, a copper foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

The foregoing secondary battery may be prepared in a preparation method commonly used in the art, and the preparation method is exemplarily illustrated herein but is not limited to the following preparation method.

The preparation method of the foregoing secondary battery includes preparing the negative electrode plate by using the following steps S10 to S30.

S10. Prepare the foregoing negative electrode active material.

S20. Prepare the negative electrode active material into a negative electrode slurry.

S30. Apply the negative electrode slurry onto at least one surface of the negative electrode current collector to produce the negative electrode film layer.

In any embodiment of this application, the raw materials used for preparing the negative electrode active material include the first carbon-based material, the second carbon-based material, and the third carbon-based material, where the particle size of the first carbon-based material is less than or equal to 2 µm, the particle size of the second carbon-based material is greater than 2 µm and less than or equal to 25 µm, and the particle size of the third carbon-based material is greater than 40 µm.

It can be understood that the first carbon-based material, the second carbon-based material, and the third carbon-based material are provided in accordance with the particle size-based volume percentages in the negative electrode active material.

Selection and parameter control of the first carbon-based material, second carbon-based material, and third carbon-based material are the same as above, and are not repeated herein.

In any embodiment of this application, the specific step of preparing the negative electrode active material includes the following step:
mixing the first carbon-based material, the second carbon-based material, and the third carbon-based material to produce the negative electrode active material.

Optionally, in the above step of mixing, the mixing time is 0.5-10 h.

The mixing time is controlled to make the materials mixed to uniformity without destroying the structure of the original material particles.

Specifically, the above step of mixing is performed in a mixer.

In any embodiment of this application, the negative electrode slurry has a solid content of 30 wt%-70 wt% and a viscosity at room temperature adjusted to 2,000-10,000 mPa·s; and the produced negative electrode slurry is applied onto the negative electrode current collector, followed by drying and cold pressing, for example, being pressed by counter-rollers, to produce the negative electrode plate. A coating surface density per unit of negative electrode powder is 75-220 mg/m², and a compacted density of the negative electrode plate is 1.2-2.0 g/m³.

In any embodiment of this application, the foregoing secondary battery further includes a positive electrode plate, an electrolyte, and a separator.

Optionally, the foregoing secondary battery may be a sodium-ion battery, a lithium-ion battery, or a potassium-ion battery.

In a specific example, the foregoing secondary battery is a sodium-ion battery.

The positive electrode plate, the electrolyte, and the separator are illustrated below with examples, but are not limited to the following scopes.

### [Positive electrode plate]

The positive electrode plate includes a positive electrode current collector and a positive electrode film layer provided on at least one surface of the positive electrode current collector, and composition of the positive electrode film layer includes a positive electrode active material.

For example, in the positive electrode plate, the positive electrode current collector has two opposite surfaces in its thickness direction, and the positive electrode active material layer is disposed on either or both of the two opposite surfaces of the positive electrode current collector.

In any embodiment of this application, the positive electrode current collector of the positive electrode plate may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

The positive electrode active material may be a positive electrode active material commonly used in this application, for example, a lithium-ion positive electrode active material or a sodium-ion positive electrode active material.

Further, for example, the lithium-ion active material may include at least one of the following materials: olivine-structured lithium-containing phosphate, lithium transition metal oxide, and respective modified compounds thereof. However, this application is not limited to such materials, and may alternatively use other conventional materials that can be used as positive electrode active materials for batteries. One of these positive electrode active materials may be used alone, or two or more of them may be used in combination. Examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), and LiNi_{0.8}Co_{0.1}Mn_{0.1}O₂ (NCM811 for short)), lithium nickel aluminum cobalt oxide (for example, LiNi_{0.85}Co_{0.15}Al_{0.05}O₂), and modified compounds thereof. Examples of the olivine-structured lithium-containing phosphate may include but are not limited to at least one of lithium iron phosphate (for example, LiFePO₄ (LFP for short)), lithium manganese phosphate (for example, LiMnPO₄), and lithium manganese iron phosphate.

In any embodiment of this application, the molecular formula of the lithium-ion active material is LiFeₓMn₍₁₋ₓ₎PO₄, x being any one of 0-1.

It can be understood that when x is 0, LiFeₓMn₍₁₋ₓ₎PO₄ is LiMnPO₄, lithium manganese phosphate; and when x is 1, LiFePO₄ is LiFePO₄, lithium iron phosphate (LFP).

For example, the sodium-ion active material may include at least one of the following materials: at least one of sodium transition metal oxide, polyanionic compound, and Prussian blue compound. However, this application is not limited to these materials, and may also use other conventional well-known materials that can be used as positive electrode active materials for sodium-ion batteries.

In an optional technical solution of this application, in the sodium transition metal oxide, the transition metal includes at least one of Mn, Fe, Ni, Co, Cr, Cu, Ti, Zn, V, Zr, and Ce. The sodium transition metal oxide is, for example, NaₓMO₂, where M includes at least one or more of Ti, V, Mn, Co, Ni, Fe, Cr, and Cu, and 0 < x ≤ 1.

In an optional technical solution of this application, the polyanionic compound may be a compound having sodium ions, transition metal ions, and tetrahedron (YO₄)ⁿ⁻ anion units. The transition metal includes at least one of Mn, Fe, Ni, Co, Cr, Cu, Ti, Zn, V, Zr, and Ce; Y includes at least one of P, S, and Si; and n represents valence of (YO₄)ⁿ⁻.

The polyanionic compound may alternatively be a compound having sodium ions, transition metal ions, tetrahedron (YO₄)ⁿ⁻ anion units, and halogen anions. The transition metal includes at least one of Mn, Fe, Ni, Co, Cr, Cu, Ti, Zn, V, Zr, and Ce; Y includes at least one of P, S, and Si, and n represents valence of (YO₄)ⁿ⁻; and the halogen may be at least one of F, Cl, and Br.

The polyanionic compound may alternatively be a compound having sodium ions, tetrahedron (YO₄)ⁿ⁻ anion units, polyhedral units (ZO_{y})^{m+}, and optional halogen anions. Y includes at least one of P, S, and Si, and n represents valence of (YO₄)ⁿ⁻; Z represents transition metal and includes at least one of Mn, Fe, Ni, Co, Cr, Cu, Ti, Zn, V, Zr, and Ce, and m represents valence of (ZO_{y})^{m+}; and the halogen may be at least one of F, Cl, and Br.

The polyanionic compound is, for example, at least one of NaFePO₄, Na₃V₂(PO₄)₃ (sodium vanadium phosphate, NVP for short), Na₄Fe₃(PO₄)₂(P₂O₇), NaM'PO₄F (M' being one or more of V, Fe, Mn, and Ni), and Na₃(VO_{y})₂(PO₄)₂F_{3-2y} (0 ≤ y ≤ 1).

The Prussian blue compound may be a compound having sodium ions, transition metal ions, and cyanogen ions (CN⁻). The transition metal includes at least one of Mn, Fe, Ni, Co, Cr, Cu, Ti, Zn, V, Zr, and Ce. The Prussian blue compound is, for example, NaₐMe_{b}Me'_{c}(CN)₆, where Me and Me' each independently include at least one of Ni, Cu, Fe, Mn, Co, and Zn, 0 < a ≤ 2, 0 < b < 1, and 0 < c < 1.

Based on a total weight of the positive electrode film layer, a weight percentage of the positive electrode active material in the positive electrode film layer is 80 wt%-100 wt%.

In any embodiment of this application, the composition of the positive electrode film layer further includes a positive electrode conductive agent and a positive electrode binder.

The positive electrode conductive agent may be a conductive material commonly used in the art, including but not limited to at least one of graphite, carbon nanotubes, nanofiber, carbon black, and graphene. Specifically, the positive electrode conductive agent may be at least one selected from SP, KS-6, acetylene black, Ketjen black ECP with a branched-chain structure, SFG-6, vapor grown carbon fiber VGCF, carbon nanotubes CNTs, graphene, and composite conductive agents thereof.

Based on the total weight of the positive electrode film layer, a weight percentage of the positive electrode conductive agent in the positive electrode active layer is 0 wt%-20 wt%.

In any embodiment of this application, the positive electrode binder may be at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, hydrogenated nitrile rubber, styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), carboxymethyl chitosan (CMCS), and fluorine-containing acrylic resin.

Based on the total weight of the positive electrode film layer, a weight percentage of the positive electrode binder in the positive electrode active layer is 0 wt%-30 wt%.

In any embodiment of this application, the positive electrode plate may be prepared in the following manner: the foregoing constituents used for preparing the positive electrode plate are dispersed in a solvent (for example, N-methylpyrrolidone) to produce a positive electrode slurry; and the positive electrode slurry is applied onto the positive electrode current collector, followed by processes such as drying and cold pressing to produce the positive electrode plate. The positive electrode slurry has a solid content of 40 wt%-80 wt% and a viscosity at room temperature adjusted to 5,000-25,000 mPa·s. The positive electrode slurry is applied onto a surface of the positive electrode current collector, followed by drying and then cold pressing by a cold rolling machine to produce the positive electrode plate. A coating surface density per unit of positive electrode powder is 150-350 mg/m², and a compacted density of the positive electrode plate is 3.0-3.6 g/cm³, optionally 3.3-3.5 g/cm³. A formula for calculating the compacted density is: compacted density = coating surface density/(thickness of electrode plate after pressing - thickness of current collector).

### [Electrolyte]

The electrolyte includes an electrolytic salt and a solvent.

In some embodiments, the electrolytic salt may be selected from electrolytic salts commonly used in the art, including a lithium-ion electrolytic salt and a sodium-ion electrolytic salt.

For example, the lithium-ion electrolytic salt is one or more selected from lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bistrifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate (LiPO₂F₂), lithium difluoro(dioxalato)phosphate (LiDFOP), Li(FSO₂)₂N, LiCF₃SO₃, and lithium tetrafluoro oxalato phosphate (LiTFOP).

For example, the sodium-ion electrolytic salt is one or more selected from sodium hexafluorophosphate (NaPF₆), NaClO₄, NaAIClh, NaFeClh, NaBF₄, NaBClh, NaNO₃, NaPOFA, NaSCN, NaCN, NaAsF₆, NaCF₃CO₂, NaSbF₆, NaC₆HsCO₂, Na(CH₃)C₆H₄SO₃, NaHSO₄, and NaB(C₆Hs)₄.

In any embodiment of this application, the solvent may be selected from one or more of fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-gamma butyrolactone (GBL), sulfolane (SF), methyl sulfonyl methane (MSM), ethyl methyl sulfone (EMS), and diethyl sulfone (ESE).

In any embodiment of this application, a concentration of the electrolytic salt is generally 0.5-15 mol/L.

In any embodiment of this application, the electrolyte further optionally includes an additive. For example, the additive may include a negative electrode film-forming additive and a positive electrode film-forming additive, or may include an additive that can improve some performance of the battery, for example, an additive for improving over-charge resistance performance of the battery and an additive for improving high-temperature performance or low-temperature performance of the battery.

### [Separator]

The separator is disposed between the positive electrode plate and the negative electrode plate.

The separator is not limited to any particular type in this application, and may be any well-known porous separator with good chemical stability and mechanical stability.

In some embodiments, a material of the separator may be at least one selected from glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

The foregoing secondary battery further includes a housing for packing the positive electrode plate, the negative electrode plate, the separator, and the electrolyte.

In some embodiments, the housing may be a hard shell, for example, a hard plastic shell, an aluminum shell, or a steel shell. The housing may alternatively be a soft pack, for example, a soft pouch. A material of the soft pack may be plastic, which, for example, may be polypropylene, polybutylene terephthalate, and polybutylene succinate.

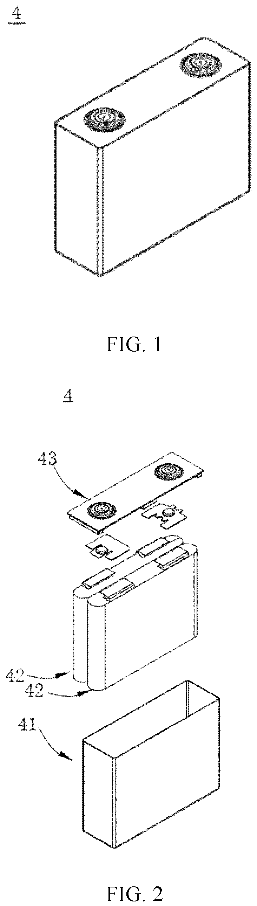

The secondary battery is not limited to any specific shape in this application, and the secondary battery may be cylindrical, rectangular, or of any other shape. For example, FIG. 1 shows a secondary battery 4 of a rectangular structure as an example.

In some embodiments, referring to FIG. 2, the housing may include a housing body 41 and a cover plate 43. The housing body 41 may include a base plate and side plates connected onto the base plate, and the base plate and the side plates enclose an accommodating cavity. The housing body 41 has an opening communicating with the accommodating cavity, and the cover plate 43 can cover the opening to close the accommodating cavity.

The positive electrode plate, the negative electrode plate, and the separator may be made into an electrode assembly 42 through winding or lamination. The electrode assembly 42 is packaged in the accommodating cavity. The electrolyte infiltrates the electrode assembly 42. The battery 4 may include one or more electrode assemblies 42, and the quantity may be adjusted as required.

This application further provides an electric apparatus, where the electric apparatus includes the foregoing secondary battery.

Further, in the electric apparatus, the secondary battery may be present in a form of a battery cell or may be further assembled into a form of a battery pack.

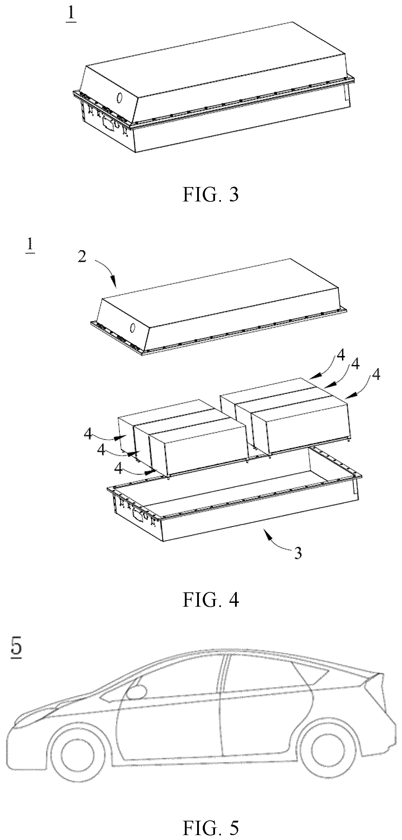

FIG. 3 and FIG. 4 show a battery pack 1 as an example. The battery pack 1 includes a battery box and one or more secondary batteries 4 arranged in the battery box. The battery box includes an upper box body 2 and a lower box body 3. The upper box body 2 can be engaged with the lower box body 3 to form an enclosed space for accommodating the secondary batteries 4.

The plurality of secondary batteries 4 may be arranged in the battery box in any manner.

The secondary battery or the battery pack assembled with the secondary battery may be used as a power source for the electric apparatus or an energy storage unit of the electric apparatus.

The electric apparatus may include but is not limited to a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, and an energy storage system.

FIG. 5 shows an electric apparatus 5 as an example. This electric apparatus 5 is a battery electric vehicle, a hybrid electric vehicle, a plug-in hybrid electric vehicle, or the like. To satisfy requirements of the electric apparatus 5 for high power and high energy density of the secondary battery, a battery pack may be used.

In another example, the electric apparatus may be a mobile phone, a tablet computer, a notebook computer, or the like. Such apparatus is generally required to be light and thin and may use a battery as its power source.

The following describes the present invention with reference to specific examples, but the present invention is not limited to the following specific examples. It should be understood that the appended claims summarize the scope of the present invention, and persons skilled in the art, under guidance of the conception of the present invention, should realize that certain changes made to the embodiments of the present invention all fall within the spirit and scope of the claims of the present invention.

The following are specific examples.

### Specific examples

### Example 1

### (1) Mixing of negative electrode active particles

Hard carbon particles were provided, including first hard carbon particles, second hard carbon particles, and third hard carbon particles, where the particle sizes were T1, T2, and T3 respectively.

Particle size-volume cumulative distribution curves of the first hard carbon particles, second hard carbon particles, and third hard carbon particles were separately measured and obtained in accordance with the standard GB/T 19077-2016 by using a laser particle size analyzer of Mastersizer 2000E model, and powder compacted densities and tap densities thereof were measured. Specific parameters are shown in Table 1.

The above hard carbon particles were mixed according to preset volume percentages in a mixer with a mixing time of 4 h to produce mixed hard carbon particles.

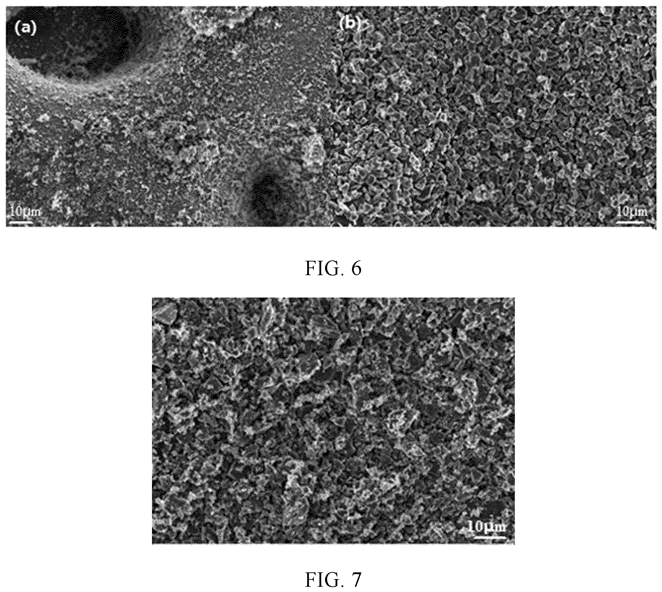

Morphologies of the hard carbon particles before and after mixing were separately observed. FIG. 6 shows electron microscope images of the hard carbon particles before mixing, where in FIG. 6, (a) is an electron microscope image of the first hard carbon particles before mixing, and (b) is an electron microscope image of the second hard carbon particles before mixing. FIG. 7 shows an electron microscope image of hard carbon particles after mixing.

XRD and Raman tests were performed on the hard carbon particles after mixing, with an XRD result indicating that a peak position of peak d002 was 22°-24°, and a Raman result indicating that a ratio of peak intensities of peak D at 1350±50 cm⁻¹ and peak G at 1580±50 cm⁻¹, I_{D}/I_{G}, was 0.9-1.35. XRD and Raman tests both indicated that the hard carbon particles after mixing still had characteristic peaks of hard carbon, and the structure of hard carbon was not damaged during mixing.

Particle size of the hard carbon particles after mixing was measured in accordance with the standard GB/T 19077-2016 by using the laser particle size analyzer of Mastersizer 2000E model to obtain a particle size-volume cumulative distribution curve thereof. For related parameter results thereof, refer to Table 4. Based on a total area of a volume peak of the hard carbon particles after mixing, in the carbon-based material, area percentages in the volume peak of hard carbon particles with a particle size less than or equal to 2 µm, hard carbon particles with a particle size greater than 2 µm and less than or equal to 25 µm, and hard carbon particles with a particle size greater than 40 µm were denoted as D1, D2, and D3 respectively. The proportions of the carbon particles at different levels were adjusted to make the values of D1, D2, and D3 satisfy the relationships in Table 4.

A powder compacted density and a tap density of the hard carbon particles after mixing were measured. For specific results, refer to Table 3.

The test for powder compacted density was performed under a pressure of 50,000 N in accordance with the standard GB/T 24533-2009, and the test for tap density was performed in accordance with the standard GB/T 5162-2006.

A specific surface of the hard carbon particles after mixing was measured in accordance with the standard GB/T 19587-2004 "Determination of the specific surface area of solids by gas adsorption using the BET method". For specific results, refer to Table 2.

### (2) Preparation of negative electrode plate

The above hard carbon particles after mixing, a conductive agent carbon black, a binder water-soluble unsaturated resin SR-1B (alkyd unsaturated polyester resin), a thickener sodium carboxymethyl cellulose (CMC-Na) were mixed at a weight ratio of 95:1.74:2.3:0.96, and then dispersed in a solvent deionized water to produce a negative electrode slurry; and the negative electrode slurry was applied onto a negative electrode current collector, followed by processes such as drying and cold pressing, to produce a negative electrode plate. A coating surface density per unit of the negative electrode plate was 50 g/m², and a compacted density of the negative electrode plate was 1.2 g/m³.

The above compacted density and surface density of the electrode plate have the meanings commonly known in the art. The surface density of the electrode plate refers to the weight of the active layer loaded on the electrode plate per unit area, and the surface density per unit = weight of the active layer/area of the active layer. The weight of the active layer can be obtained by subtracting the weight of the current collector from the weight of the electrode plate.

The above compacted density of the electrode plate refers to the ratio of the surface density of the electrode plate to the thickness of the active layer, which is one of the reference indicators of the energy density of the material. Test method: The surface density of the electrode plate was determined according to the above method, the total thickness of the electrode plate was measured using a vernier caliper, and the thickness of the active layer was calculated by subtracting the thickness of the current collector from the total thickness of the electrode plate. The compacted density of the electrode plate can be calculated based on the two parameters: surface density and thickness.

The adhesion force and porosity of the prepared negative electrode plate were tested. The porosity was tested in accordance with the standard GB/T 19587-2004. The adhesion force was tested using the following steps.

At 25°C, the negative electrode plate was cut into a sample that was 30 mm wide and 100-160 mm long by using a blade. A special double-sided adhesive that was 20 mm wide and 90-150 mm long was pasted to a steel plate. The resulting electrode plate sample was pasted to the double-sided adhesive, with a test surface facing downward, and then rolled by a roller back and forth along a same direction for three times. A paper tape with a width equal to that of the electrode plate and a length of 80-200 mm greater than that of the sample was inserted below the electrode plate and fastened by using a wrinkle stipple. A tensile machine was turned on, with an indicator light on, a restraint block was adjusted to an appropriate position, the end of the steel plate not pasted with the electrode plate was fixed with a lower clamp, the paper tape was folded upward and fixed with an upper clamp, the "up" and "down" buttons on the manual controller of the tensile machine were used to adjust the position of the upper clamp, a dedicated computer linked with the tensile machine was turned on, and a software icon on the desktop was double-clicked for testing. A stretching speed was 50 m/min, and a test distance was 50 mm. One data point was collected every 10s using the software, these data point values were used as a vertical coordinate, and the corresponding test distances were used as a horizontal coordinate. Readings on the vertical coordinate tended to be stable, and a stable reading on the vertical coordinate was acquired, which was the adhesion force.

For specific test results, refer to Table 3.

### (3) Preparation of positive electrode plate

Preparation of sodium-ion positive electrode plate: A positive electrode active material Prussian white, a conductive agent carbon black, and polyvinylidene fluoride (PVDF) were dissolved at a weight ratio of 95:5:5 in a solvent N-methylpyrrolidone and well mixed to produce a positive electrode slurry. The positive electrode slurry was evenly applied onto a positive electrode current collector copper foil at one time, followed by drying, cold pressing, and slitting, to produce a sodium-ion positive electrode plate.

(4) Preparation of separator: a polypropylene film was used as a separator.

### (5) Preparation of electrolyte

In an argon atmosphere glove box (H₂O < 0.1 ppm, and O₂ < 0.1 ppm), organic solvents ethylene carbonate (EC) and ethyl methyl carbonate (EMC) were well mixed at a volume ratio of 3:7 to produce an organic solvent, a salt NaPF₆ was added to dissolve in the organic solvent, and the solution was well stirred to produce an electrolyte with a NaPF₆ salt concentration of 12.5 wt%.

(6) The sodium-ion positive electrode plate and negative electrode plate sequentially went through slitting, shaping, and assembly and then were put into a housing, and the sodium-ion battery electrolyte was injected into the housing, followed by processes such as formation and aging, to prepare a lithium-ion battery.

### (7) Cycling performance test for sodium-ion battery

At 25°C, charge and discharge were repeatedly performed on the prepared sodium-ion secondary battery, and its capacity (capacity) retention rate after n charge and discharge cycles (cycle) was calculated. The specific process was as follows.

At 25°C, the prepared sodium-ion battery was constant-current charged at 1C to a charge cut-off voltage of 4.25 V, then constant-voltage charged to a current of less than or equal to 0.05C and left standing for 5 min, and then constant-current discharged at 0.33C to a discharge cut-off voltage of 2.8 V and left standing for 5 min. A capacity at that moment was recorded as C0. This was one charge and discharge cycle.

The cyclic charge and discharge test was performed on the battery as described above, and the cycle was repeated for 500 times. A discharge capacity at each cycle was recorded, and the capacity at the 500th cycle was recorded as C500. C500 = (C500/C0) × 100%. For specific results, refer to Table 4.

### (8) Test for initial coulombic efficiency of sodium-ion battery

At 25°C, the corresponding battery was constant-current discharged at 0.05C to 5 mV, then constant-voltage discharged at 50 µA to 5 mV, left standing for 1 h, and then discharged at 10 µA to 5 mV. The resulting capacity was recorded as the discharge capacity C0. The battery was then left standing for 1 h, and then constant-current charged at 0.05C to 2 V. The resulting capacity was the charge capacity C1. The initial coulombic efficiency P0 = C1/C0*100%.

For specific results, refer to Table 3.

### Examples 2 to 12

Examples 2 to 12 were basically the same as Example 1 except that volume percentages of the hard carbon particles in step (1) Mixing of negative electrode active particles were regulated so that some of the parameters of the hard carbon particles after mixing in Examples 2 to 12 were different from those in Example 1. For details, refer to Table 2.

### Examples 13 to 15

Examples 13 to 15 were basically the same as Example 1 except that the mixing times in step (1) Mixing of negative electrode active particles of Examples 13 to 15 were 0.5 h, 2 h, and 8 h respectively so that some of the parameters of the hard carbon particles after mixing in Examples 13 to 15 were different from those in Example 1. For details, refer to Table 2.

### Comparative example 1

Comparative example 1 was basically the same as Example 1 except that volume percentages of the hard carbon particles in step (1) Mixing of negative electrode active particles were regulated so that some of the parameters of the hard carbon particles after mixing in Comparative example 1 were different from those in Example 1.

For details, refer to Table 2.

The parameters of the first hard carbon particles, second hard carbon particles, and third hard carbon particles used in the examples and comparative example are shown in Table 1.

**Table 1**

| First hard carbon particles | | | | | | |
|---|---|---|---|---|---|---|
| T1 [µm] | Dᵥ10 (µm) | Dᵥ50 (µm) | Dᵥ90 (µm) | Compacted density (g/cm³) | Tap density (g/cm³) | |
| 0.3-2 | 0.5 µm | 1.2 | 1.8 | 0.92 | 0.68 | |

| Second hard carbon particles | | | | | | |
|---|---|---|---|---|---|---|
| T2 (µm] | Dᵥ10 (µm) | Dᵥ50 (µm) | Dᵥ90 (µm) | Dᵥ99 (µm) | Compacted density (g/cm³) | Tap density (g/cm³) |
| 2-25 | 2.5 | 6 | 8.9 | 25 | 0.93 | 0.78 |

| Third hard carbon particles | | | | | | |
|---|---|---|---|---|---|---|
| T3 (µm] | Compacted density (g/cm³) | Tap density (g/cm³) | | | | |
| 40-100 | 0.81 | 0.53 | | | | |

In the above table, "( )" indicates that the range of values in the brackets cannot take the endpoint value on either side, "[ ]" indicates that the range of values in the brackets can take the endpoint values on both sides, and "( ]" or "[ )" indicates that the range of values in the brackets can take the endpoint value at the "[" end and cannot take the endpoint value at the ")" end.

For the parameters of the hard carbon particles after mixing in the examples and comparative example, refer to Table 2. The parameters of the negative electrode plates and the performance test results of the sodium-ion batteries are shown in Table 3.

In Table 2, based on the total area of the volume peak of the hard carbon particles after mixing, D1 represents the area percentage in the volume peak of the first hard carbon particles with a particle size less than or equal to 2 µm, D2 represents the area percentage in the volume peak of the second hard carbon particles with a particle size greater than 2 µm and less than or equal to 25 µm, and D3 represents the area percentage in the volume peak of the third hard carbon particles with a particle size greater than 40 µm.

**Table 2**

| | Hard carbon particles after mixing | | | | | | | | |
|---|---|---|---|---|---|---|---|---|---|
| | D1 (V%) | D2 (V%) | D3 (V%) | Dᵥ10 (µm) | Dᵥ50 (µm) | Dᵥ90 (µm) | Compacted density (g/cm³) | Tap density (g/cm³) | Specific surface area (m²/g) |
| Example 1 | 15 | 80 | 5 | 1.6 | 5.1 | 18.1 | 0.92 | 0.61 | 5.3 |
| Example 2 | 20 | 75 | 5 | 1.1 | 3.9 | 17.6 | 0.93 | 0.65 | 5.9 |
| Example 3 | 30 | 65 | 5 | 1 | 3.5 | 15.2 | 0.97 | 0.81 | 6.4 |
| Example 4 | 40 | 55 | 5 | 0.8 | 3.4 | 13.6 | 1.2 | 0.92 | 7.5 |
| Example 5 | 50 | 45 | 5 | 0.7 | 1.8 | 10.1 | 1.11 | 0.9 | 9.1 |
| Example 6 | 60 | 35 | 5 | 0.6 | 1.6 | 8.7 | 1.02 | 0.85 | 10. |
| Example 7 | 70 | 25 | 5 | 0.5 | 1.4 | 7.1 | 0.95 | 0.78 | 12.5 |
| Example 8 | 40 | 50 | 10 | 0.8 | 4.3 | 20.8 | 1.07 | 0.89 | 6.8 |
| Example 9 | 40 | 52 | 8 | 0.8 | 4 | 18.8 | 1.12 | 0.9 | 7.1 |
| Example 10 | 40 | 54 | 6 | 0.8 | 3.6 | 15.4 | 1.17 | 0.9 | 7.2 |
| Example 11 | 40 | 56 | 4 | 0.8 | 3.2 | 12.8 | 1.19 | 0.92 | 7.6 |
| Example 12 | 40 | 58 | 2 | 0.8 | 2.7 | 12.1 | 1.21 | 0.92 | 7.4 |
| Example 13 | 40 | 55 | 5 | 1.1 | 7.2 | 18.1 | 1.11 | 0.91 | 7.1 |
| Example 14 | 40 | 55 | 5 | 0.9 | 3.7 | 14.7 | 1.17 | 0.92 | 7.2 |
| Example 15 | 40 | 55 | 5 | 0.8 | 3.5 | 13.2 | 1.2 | 0.93 | 7.4 |
| Example 16 | 40 | 60 | 0 | 0.7 | 2.6 | 15.1 | 1.19 | 0.91 | 7.8 |
| Comparative example 1 | 10 | 85 | 5 | 1.7 | 5.6 | 17 | 0.91 | 0.6 | 4.8 |

**Table 3**

| | Negative electrode plate | | Sodium-ion battery | |
|---|---|---|---|---|
| | Adhesion force (N/m) | Porosity (%) | C500 (%) | P0 (%) |
| Example 1 | 8 | 43.0 | 76% | 88% |
| Example 2 | 8.9 | 37.6 | 78% | 87% |
| Example 3 | 11.2 | 35.4 | 83% | 85% |
| Example 4 | 14.5 | 33.2 | 92% | 82% |
| Example 5 | 14.1 | 34.1 | 89% | 79% |
| Example 6 | 13.8 | 34.7 | 84% | 78% |
| Example 7 | 15 | 35.6 | 72% | 76% |
| Example 8 | 11.5 | 36.8 | 77% | 81% |
| Example 9 | 12.7 | 36.0 | 79% | 82% |
| Example 10 | 13.2 | 34.2 | 90% | 83% |
| Example 11 | 14.7 | 33.7 | 93% | 83% |
| Example 12 | 15 | 30.9 | 95% | 85% |
| Example 13 | 13 | 35.2 | 85% | 80% |
| Example 14 | 14.4 | 33.3 | 90% | 83% |
| Example 15 | 14.7 | 32.8 | 92% | 81% |
| Example 16 | 15.2 | 30.8 | 95% | 82% |
| Comparative example 1 | 7.4 | 46 | 70% | 89% |

It can be seen from the data in Table 3 that the negative electrode active material in the negative electrode film layer of the negative electrode plate is controlled to contain the carbon-based material with the particle size in a specified range, and the volume percentage of the carbon-based material in the negative electrode active material is regulated, so that contact areas between the negative electrode active particles are increased and the negative electrode active particles are closely accumulated, thereby enhancing adhesion of the negative electrode plate, which in turn can improve the initial coulombic efficiency and cycling performance of the secondary battery.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A secondary battery, comprising a negative electrode plate, wherein the negative electrode plate comprises a negative electrode current collector and a negative electrode film layer provided on at least one surface of the negative electrode current collector, the negative electrode film layer comprises a negative electrode active material, and the negative electrode active material comprises a carbon-based material, wherein
in the negative electrode active material, a volume percentage of a first carbon-based material with a particle size less than or equal to 2 µm is greater than or equal to 15%.

2. The secondary battery according to claim 1, wherein in the negative electrode active material, the volume percentage of the first carbon-based material is 20%-70%, optionally 30%-60%.

3. The secondary battery according to claim 1 or 2, wherein the first carbon-based material satisfies at least one of the following conditions (1) to (7):
(1) a volume-based particle size Dᵥ10 of the first carbon-based material is 0.2-0.5 µm;
(2) a volume-based particle size Dᵥ50 of the first carbon-based material is 0.5-2 µm;
(3) a volume-based particle size Dᵥ90 of the first carbon-based material is less than or equal to 2 µm;
(4) a specific surface area SSA of the first carbon-based material is 5-20 m²/g;
(5) in Raman spectroscopy test of the first carbon-based material, I_{D}/I_{G} is 0.95-1.35;
(6) a powder compacted density of the first carbon-based material under a force of 50,000 N is 0.8-1.1 g/cm³; and
(7) a tap density of the first carbon-based material is 0.3-0.8 g/cm³.

4. The secondary battery according to any one of claims 1 to 3, wherein in the negative electrode active material, a volume percentage of a second carbon-based material with a particle size greater than 2 µm and less than or equal to 25 µm is 20%-80%, optionally 50%-60%.

5. The secondary battery according to claim 4, wherein the second carbon-based material satisfies at least one of the following conditions (I) to (VIII):
(I) a volume-based particle size of the second carbon-based material exhibits unimodal distribution;
(II) a volume-based particle size Dᵥ10 of the second carbon-based material is 2-4 µm;
(III) a volume-based particle size Dᵥ50 of the second carbon-based material is 4-8 µm;
(IV) a volume-based particle size Dᵥ90 of the second carbon-based material is 8-20 µm;
(V) a volume-based particle size Dᵥ99 of the second carbon-based material is 20-25 µm;
(VI) a specific surface area SSA of the second carbon-based material is 1-10 m²/g;
(VII) a powder compacted density of the second carbon-based material under a force of 50,000 N is 0.92-1.2 g/cm³; and
(VIII) a tap density of the second carbon-based material is 0.6-0.94 g/cm³.

6. The secondary battery according to any one of claims 1 to 5, wherein in the negative electrode active material, a volume percentage of a third carbon-based material with a particle size greater than 40 µm and less than or equal to 100 µm is less than or equal to 10%, optionally less than or equal to 5%.

7. The secondary battery according to claim 6, wherein the third carbon-based material satisfies at least one of the following conditions (1) to (4):
(1) a specific surface area SSA of the third carbon-based material is 1-10 m²/g;
(2) in Raman spectroscopy test of the third carbon-based material, I_{D}/I_{G} is 0.95-1.35;
(3) a powder compacted density of the third carbon-based material under a force of 50,000 N is 0.7-1 g/cm³; and
(4) a tap density of the third carbon-based material is 0.5-0.8 g/cm³.

8. The secondary battery according to any one of claims 1 to 7, wherein a volume-based particle size Dᵥ50 of the negative electrode active material is less than or equal to 8 µm, and optionally, the volume-based particle size Dᵥ50 of the negative electrode active material is 2-6 µm.

9. The secondary battery according to any one of claims 1 to 8, wherein a volume-based particle size of the negative electrode active material satisfies 4 µm ≤ Dᵥ90 ≤ 20 µm, optionally 5 µm ≤ Dᵥ90 ≤ 16 µm.

10. The secondary battery according to any one of claims 1 to 9, wherein a volume-based particle size Dᵥ10 of the negative electrode active material satisfies 0.2 µm ≤ Dᵥ10 ≤ 2 µm, optionally 0.5 µm ≤ Dᵥ10 ≤ 1.8 µm.

11. The secondary battery according to any one of claims 1 to 10, wherein a specific surface area SSA of the negative electrode active material is less than or equal to 20 m²/g, optionally SSA ≤ 10 m²/g.

12. The secondary battery according to any one of claims 1 to 11, wherein in Raman spectroscopy test of the negative electrode active material, I_{D}/I_{G} is 0.87-1.35, optionally 0.91-1.25.

13. The secondary battery according to any one of claims 1 to 12, wherein in X-ray diffraction test of the negative electrode active material, a (002) crystal plane peak is present within a range of 22°-24°, and an interlayer spacing of the (002) crystal plane of the negative electrode active material is greater than or equal to 0.37 nm, optionally 0.37-0.42 nm.

14. The secondary battery according to any one of claims 1 to 13, wherein a powder compacted density of the negative electrode active material under a force of 50,000 N is 0.90-1.5 g/cm³, optionally 0.95-1.3 g/cm³.

15. The secondary battery according to any one of claims 1 to 14, wherein a tap density of the negative electrode active material is 0.50-0.97 g/cm³, optionally 0.6-0.94 g/cm³.

16. The secondary battery according to any one of claims 1 to 15, wherein the carbon-based material comprises a plurality of nanopore structures, and optionally the carbon-based material comprises a plurality of pore structures with a pore diameter of 10 nm or below.

17. The secondary battery according to any one of claims 1 to 16, wherein the carbon-based material comprises a hard carbon material.

18. The secondary battery according to any one of claims 1 to 17, wherein the secondary battery is a sodium-ion secondary battery.

19. An electric apparatus, comprising the secondary battery according to any one of claims 1 to 18.
